# EUROPÄISCHE PATENTSCHRIFT

(11) **EP 4 536 953 B1**
(45) Veröffentlichungstag und Bekanntmachung des Hinweises auf die Patenterteilung: **25.02.2026**
(21) Anmeldenummer: 23713265.9
(22) Anmeldetag: 20.03.2023
(51) Int. Cl.: F03B 1/02

(54) **SCHAUFEL EINER PELTONTURBINE**
BLADE OF A PELTON TURBINE
AUBE D'UNE TURBINE PELTON

(30) Priorität: 07.06.2022 AT 503962022
(43) Veröffentlichungstag der Anmeldung: 16.04.2025
(73) Patentinhaber: Andritz Hydro GmbH, 1120 Wien (AT)
(72) Erfinder: NICOLAS, Gervais, 25370 Les Longevilles (FR); ANDOLFATTO, Loic, 1018 Lausanne (CH)
(74) Vertreter: Wirnsberger & Lerchbaum Patentanwälte OG
(86) Internationale Anmeldenummer: PCT/AT2023/060078
(87) Internationale Veröffentlichungsnummer: WO 2023/235905

(56) Entgegenhaltungen:
- EP-B1- 1 386 076
- AT-B- 60 340
- DE-A1- 10 210 426
- DE-A1- 102009 004 816

## Beschreibung

Die Erfindung betrifft eine Schaufel einer Peltonturbine mit einer zumindest abschnittsweise gekrümmten Austrittskante.

Peltonturbinen zählen seit langem zum Stand der Technik und sind insbesondere aus dem Dokument CA 32918 A bekannt. Während zunächst nur Schaufeln mit ebenen Austrittskanten eingesetzt wurden, wie beispielsweise im Dokument DE 39 38 356 C2, DE 102 10 426 A1 beschrieben, sind seit einiger Zeit auch Schaufeln für Peltonturbinen mit gekrümmten Austrittskanten bekannt, insbesondere aus den Dokumenten EP 1 386 076 B1 und EP 2 868 912 A1. Ziel ist dabei stets eine Effizienzverbesserung durch eine durch die Schaufelform bewirkte günstige Strömungsbeeinflussung.

Entsprechend ist es auch Aufgabe dieser Erfindung, eine Peltonschaufel der eingangs genannten Art anzugeben, mit welcher ein besonders hoher Wirkungsgrad erreichbar ist. Diese Aufgabe wird erfindungsgemäß durch eine Schaufel der eingangs genannten Art gemäß Anspruch 1 gelöst.

Im Rahmen der Erfindung wurde erkannt, dass auf diese Weise eine Austrittshöhe des Wasserstrahls erhöht werden kann, wodurch eine bessere Kontrolle der austretenden Strömung erreicht wird, was wiederum zu einer Erhöhung des Wirkungsgrades führt.

Die erfindungsgemäße Ausbildung ermöglicht die Gestaltung innovativer Schaufelprofile mit mehr Geometriemöglichkeiten in Bezug auf Positionen, Krümmungen und Winkeln, um:
- die Energieübertragung auf das Laufrad für eine bessere hydraulische Effizienz zu optimieren;
- die Wasserrückströmung aus dem Becher zu optimieren, um den Rückfluss zu den Düsen und das Laufrad zu reduzieren und um die Auftreffpunkte des Wassers auf Düsen oder Gehäuse zu verändern;
- die Dickenverteilung im Laufrad zur Verbesserung des Spannungsniveaus im Laufrad zu optimieren;
- die Massenverteilung im Läufer zur Verbesserung des dynamischen Verhaltens der Schachtleitung zu optimieren.

Als Becherwurzel wird ein radial innenliegendes Ende der Schaufel bzw. des Bechers bei Anordnung der Schaufel an einem Peltonrad verstanden und als Schaufelstirn wird ein bei bestimmungsgemäßer Anordnung der Schaufel an einer Peltonturbine radial außenliegendes Ende des Bechers verstanden. Der hintere Höcker ist somit üblicherweise in einer radial innenliegenden Hälfte der Schaufel angeordnet und ragt zumeist nicht über einen Strahlkreisdurchmesser hinaus. Insbesondere ein Scheitelpunkt des Höckers, also ein Punkt des Höckers, an welchem der Höcker einen maximalen Abstand zu einer gedachten ebenen Austrittskante aufweist, liegt üblicherweise radial innerhalb des Strahlkreisdurchmessers.

Erfindungsgemäß überragt der Höcker eine Mittelschneide. Ein ebener Teil der Austrittskante, also ein Bereich, in welchem die Austrittskante in einer Seitenansicht eine im Wesentlichen gerade Verbindungslinie zwischen Schaufelstirn und Becherwurzel bildet, kann unterhalb der Mittelschneide angeordnet sein, sodass in einer bevorzugten Ausführungsvariante die ebene Kante unterhalb der Mittelschneide liegt und nur der Höcker die Mittelschneide überragt.

Es hat sich bewährt, dass ein Schwerpunkt des hinteren Höckers zwischen Becherwurzel und einer Mitte zwischen Becherwurzel und Schaufelstirn positioniert ist. Auf diese Weise wird eine günstige Strömung sowohl in einem radial außenliegenden Bereich als auch in einem hinteren Bereich bzw. einem radial weiter innen liegenden Bereich des Bechers erzielt. Als Höcker wird hier jener Teil des Bechers verstanden, welcher eine direkte, gerade Verbindungslinie von Becherwurzel und Schaufelstirn überragt. Folglich wird als Schwerpunkt der Schwerpunkt dieses die ebene Kante überragenden Teiles verstanden.

Die Angaben radial innen und radial außen beziehen sich hier natürlich auf ein zylindrisches Koordinatensystem ausgehend von einer Rotationsachse des Peltonrades, an welchem die Schaufel bestimmungsgemäß angeordnet ist bzw. angeordnet werden kann.

Bevorzugt ist vorgesehen, dass sich der hintere Höcker von der Becherwurzel etwa bis zu einer Mitte zwischen Becherwurzel und Schaufelstirn erstreckt.

Grundsätzlich kann der Höcker, welcher Teil der Austrittskante ist, auf verschiedenste Weisen ausgebildet sein. Um günstige Strömungsverhältnisse zu erreichen, ist bevorzugt vorgesehen, dass der Höcker einen ersten, konkaven Bereich mit einem Krümmungsmittelpunkt, welcher in einer Seitenansicht oberhalb der Austrittskante positioniert ist, einen zweiten, konvexen Bereich mit einem Krümmungsmittelpunkt, welcher in einer Seitenansicht unterhalb der Austrittskante positioniert ist, und einen dritten, konkaven Bereich mit einem Krümmungsmittelpunkt, welcher in einer Seitenansicht oberhalb der Austrittskante positioniert ist, aufweist. Bevorzugt weist der hintere Höcker somit zwei Wendepunkte und dazwischen eine etwa kuppenförmige Ausbildung auf und gehen der erste konkave Bereich und der dritte konkave Bereich tangential in die angrenzende Kante der Schaufel über, welche in weiterer Folge üblicherweise in einer Seitenansicht einer geraden Verbindungslinie von Becherwurzel und Schaufelstirn bzw. einer ebenen Kante entspricht.

In der Regel ist vorgesehen, dass sich der hintere Höcker annähernd bis zur Becherwurzel erstreckt, jedoch der Becher im Bereich der Becherwurzel eine Austrittskante mit einer Höhe entsprechend einer ebenen Kante aufweist. Als ebene Kante wird hierbei eine Linie angesehen, welche in einer Seitenansicht eine gerade Verbindung von Becherwurzel und Schaufelstirn bildet.

Um eine besonders günstige Strömung und einen hohen Wirkungsgrad zu erzielen, ist bevorzugt vorgesehen, dass die Schaufel einen weiteren, vorderen Höcker aufweist, welcher zumindest abschnittsweise gekrümmt ist, wobei ein Krümmungsmittelpunkt in einer Seitenansicht unterhalb der Austrittskante positioniert ist und wobei ein Scheitelpunkt des vorderen Höckers näher an der Schaufelstirn als an der Becherwurzel angeordnet ist.

Somit ergibt sich auch in einem vorderen bzw. radial außen liegenden Bereich der Schaufel eine Anhebung einer Höhe des Strömungsaustrittes.

Der vordere Höcker weist bevorzugt ebenfalls einen konkaven Bereich, einen daran anschließenden konvexen Bereich und einen an den konvexen Bereich wiederum anschließenden konkaven Bereich auf, sodass auch der vordere Höcker bevorzugt zwei Wendepunkte aufweist und sich in aller Regel ausschließlich oberhalb einer gedachten ebenen Kante bzw. oberhalb einer geraden Verbindungslinie von Becherwurzel zu Schaufelstirn befindet. Der vordere Höcker kann sich bis zur Schaufelstirn erstrecken, wenngleich auch vorgesehen sein kann, dass der vordere Höcker sich an einem vorderen Ende nicht vollständig bis zur Schaufelstirn erstreckt, sodass sich zwischen einem vorderen Ende des vorderen Höckers und der Schaufelstirn ein gerader bzw. ebener Bereich ergibt.

Als besonders günstig hat es sich herausgestellt, wenn der vordere Höcker eine geringere Höhe als der hintere Höcker aufweist. Beispielsweise können vorderer Höcker und hinterer Höcker eine Höhe von weniger als 30 % einer maximalen Bechertiefe (gemäß der Definition der DE 39 38 356 C2) aufweisen.

Die vorliegende Erfindung kann auch mit einer Schaufel, die eine Austrittskante mit einem konkaven Bereich aufweist, wie diese beispielsweise im Dokument EP 1 386 076 B1 beschrieben ist, kombiniert werden. In diesem Fall kann vorgesehen sein, dass die Austrittskante einen konkaven Bereich aufweist, insbesondere zwischen hinterem Höcker und vorderem Höcker.

Schaufeln für Peltonturbinen sind üblicherweise symmetrisch zu einer Mittelschneide angeordnet. Entsprechend hat es sich als günstig erwiesen, wenn Höcker symmetrisch beidseits einer gedachten Mittelebene der Schaufel angeordnet sind, welche Mittelebene in der Regel die Mittelschneiden enthält.

Es versteht sich, dass entsprechende Schaufeln in der Regel an einem Peltonrad einer Peltonturbine angeordnet sind, wobei das Peltonrad bevorzugt ausschließlich erfindungsgemäß ausgebildete Schaufeln aufweist.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 einen Abschnitt eines Peltonrades mit drei erfindungsgemäß ausgebildeten Schaufeln;
Fig. 2 einen weiteren Abschnitt eines erfindungsgemäßen Peltonrades mit drei erfindungsgemäß ausgebildeten Schaufeln;
Fig. 3 ein Peltonrad;
Fig. 4 eine Schaufel eines Peltonrades;
Fig. 5 ein Peltonrad.

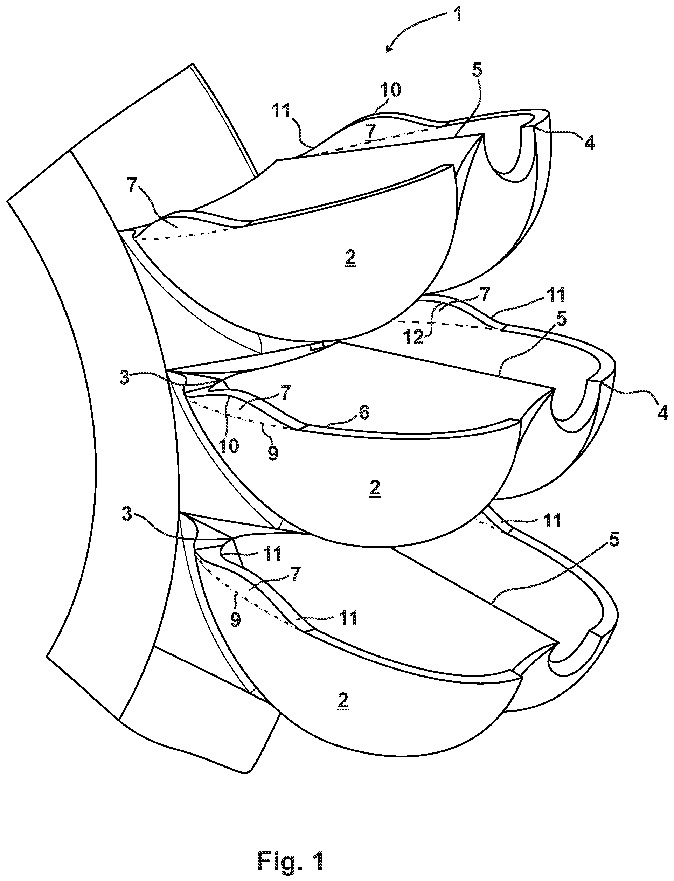

Fig. 1 zeigt einen Abschnitt eines erfindungsgemäßen Peltonrades 1 wobei drei Schaufeln 2 abgebildet sind. Wie ersichtlich weist jede Schaufel 2 eine Schaufelstirn 4, eine Becherwurzel 3 sowie eine Mittelschneide 5 auf. Die dargestellten Schaufeln 2 weisen beidseits der Mittelschneide 5 und symmetrisch zu einer Mittelebene an Austrittskanten 6 hintere Höcker 7 auf, welche sich über die dargestellte ebene Kante 9, also über eine in einer Seitenansicht gerade Verbindungslinie von Becherwurzel 3 und Schaufelstirn 4 hinaus erstrecken. Auf diese Weise wird eine Austrittshöhe der Strömung im Bereich der hinteren Höcker 7 erhöht, wodurch sich günstigere Strömungseigenschaften ergeben. Um dies besonders gut ersichtlich zu machen, ist die ebene Kante 9 im Bereich der hinteren Höcker 7 strichliert dargestellt. Außerhalb eines Bereichs der hinteren Höcker 7 entspricht die Austrittskante 6 der ebenen Kante 9.

Die hinteren Höcker 7 weisen wie ersichtlich einen ersten, konkaven Bereich 11, einen daran anschließenden zweiten, konvexen Bereich 12, welcher einen Scheitelpunkt 10 beinhaltet, und einen wiederum daran anschließenden konkaven Bereich 11 auf, wobei die konkaven Bereiche 11 etwa stetig in die ebene Austrittskante 6 übergehen. Der Scheitelpunkt 10 der hinteren Höcker 7 befindet sich wie ersichtlich in einer Seitenansicht näher an der Becherwurzel 3 als an der Schaufelstirn 4 und liegt somit radial innerhalb einer Bechermitte bzw. innerhalb eines Stahlkreises.

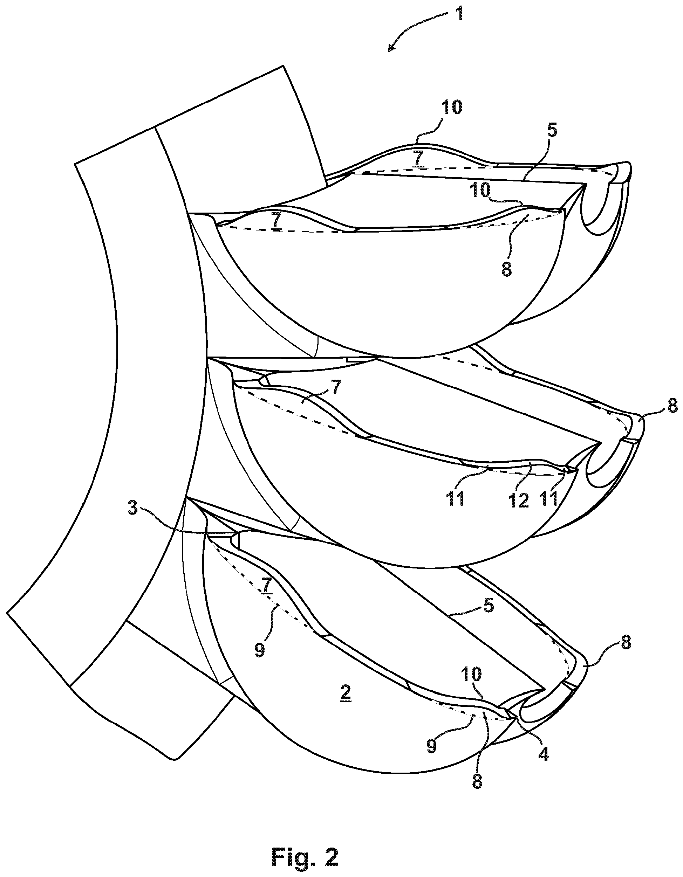

Fig. 2 zeigt ein weiteres Ausführungsbeispiel eines Peltonrades 1 mit erfindungsgemäß ausgebildeten Schaufeln 2, wobei wieder ein Bereich dargestellt ist, welcher drei Schaufeln 2 aufweist. Ergänzend zu den in Fig. 1 dargestellten hinteren Höckern 7 weisen diese Schaufeln 2 auch vordere Höcker 8 auf. Auf diese Weise wird die Höhe eines Strömungsaustrittes auch im vorderen Bereich bereichsweise angehoben. Wie ersichtlich weisen hier sowohl die hinteren Höcker 7 als auch die vorderen Höcker 8 jeweils konkave Bereiche 11, einen daran anschließenden konvexen Bereich 12 sowie einen daran wiederum anschließenden konkaven Bereich 11 auf, sodass sich ein im Wesentlichen stetiger Übergang zu der an die Höcker anschließenden Austrittskante 6 ergibt.

Weiter ist ersichtlich, dass sich sowohl der vordere Höcker 8 als auch der hintere Höcker 7 nicht gänzlich bis zu einem vorderen bzw. hinteren Ende der Schaufel 2 bzw. einer Becherwurzel 3 und einer Schaufelstirn 4 erstrecken, wenngleich dies grundsätzlich möglich ist. Der Scheitelpunkt 10 des hinteren Höckers 7 befindet sich auch hier näher an der Becherwurzel 3 als an der Schaufelstirn 4, während sich der Scheitelpunkt 10 des vorderen Höckers 8 näher an der Schaufelstirn 4 als an der Becherwurzel 3 befindet. Bei den darstellten Höckern befindet sich ein Schwerpunkt der hinteren Höcker 7 jeweils ebenfalls näher an der Becherwurzel 3 als an der Schaufelstirn 4 und befindet sich ein Schwerpunkt der vorderen Höcker 8 jeweils näher an der Schaufelstirn 4 als an der Becherwurzel 3. Die Schwerpunkte und Scheitelpunkte 10 der hinteren Höcker 7 liegen somit radial innerhalb eines hier nicht dargestellten Stahlkreises und die Scheitelpunkte 10 und Schwerpunkte der vorderen Höcker 8 liegen radial außerhalb des Stahlkreises.

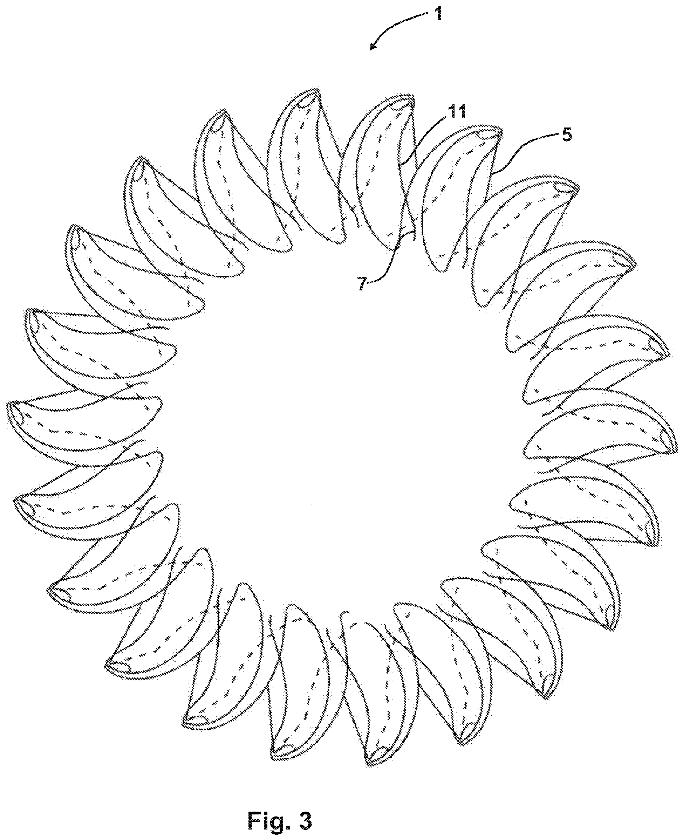

Fig. 3 zeigt ein weiteres Peltonrad 1 mit erfindungsgemäß ausgebildeten Schaufeln 2. Wie ersichtlich weisen die Schaufeln 2 einerseits einen konkaven Bereich 11 mit einer Krümmung auf, wobei ein Krümmungsmittelpunkt in einer Seitenansicht oberhalb der Austrittskante 6 liegt. Ferner weisen auch diese Schaufeln 2 radial innenliegende hintere Höcker 7 auf, um eine Strömung günstig zu beeinflussen. Die Austrittskante 6 liegt dabei im konkaven Bereich 11 unterhalb der Mittelschneide 5.

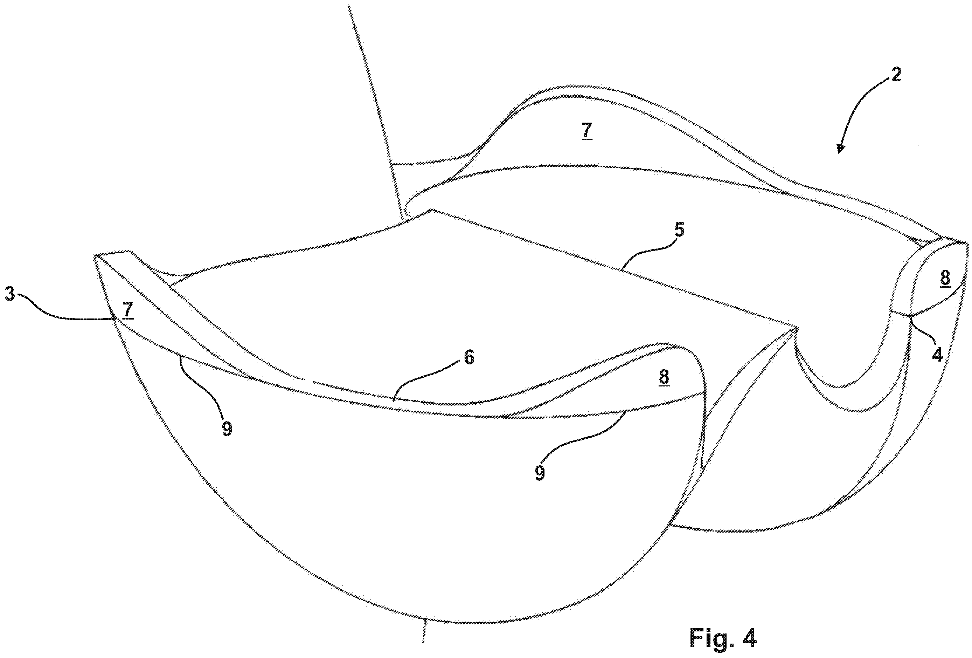

Fig. 4 zeigt eine weitere Schaufel 2 einer Peltonturbine, welche wiederum beidseits der Mittelschneide 5 hintere Höcker 7 und vordere Höcker 8 aufweist, welche sich jeweils über eine ebene Kante 9 erheben, welche außerhalb der hinteren Höcker 7 und vorderen Höcker 8 mit der Austrittskante 6 zusammenfällt. Als ebene Kante wird auch hier eine in einer Seitenansicht gerade Verbindungslinie von Schaufelstirn und Becherwurzel verstanden. Hier erstrecken sich die vorderen Höcker 8 bis zur Schaufelstirn 4 und weisen an einem vorderen Ende im Unterschied zu den in Fig. 2 dargestellten vorderen Höckern 8 keinen konkaven Bereich 11 auf, sondern gehen konvex in die Schaufelstirn 4 über. Die vorderen Höcker 8 weisen hier somit nur einen Wendepunkt auf, während die hinteren Höcker 7 hier wie bei dem in Fig. 1 dargestellten Ausführungsbeispiel einen konkaven Bereich 11, einen anschließenden konvexen Bereich 12 und einen wiederum an den konvexen Bereich 12 anschließenden konkaven Bereich 11 und somit zwei Wendepunkte aufweisen.

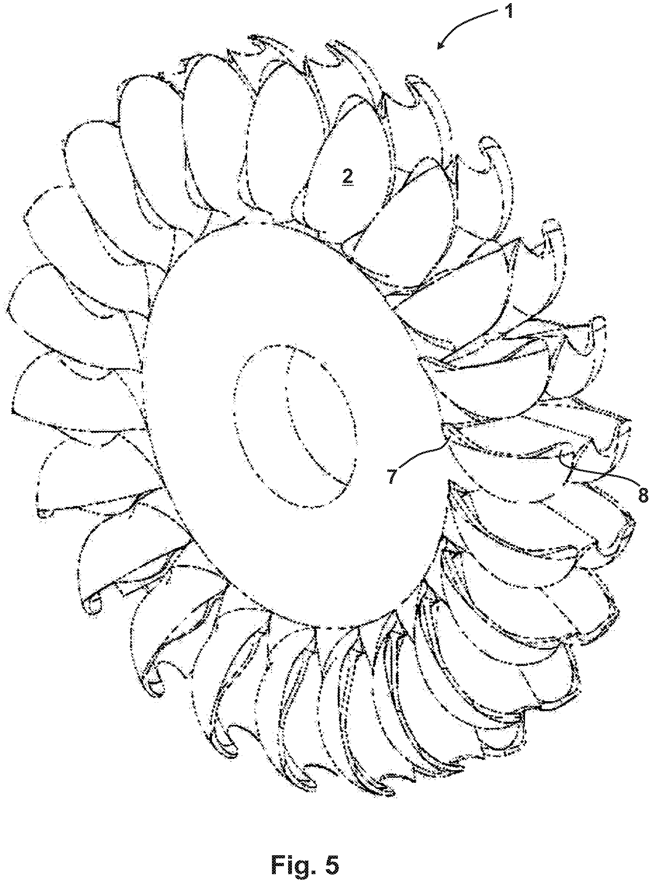

Fig. 5 zeigt ein Peltonrad 1 mit den in Fig. 4 dargestellten Schaufeln 2.

Durch eine erfindungsgemäße Ausbildung von Schaufeln 2 einer Peltonturbine kann eine günstige Strömungsbeeinflussung erreicht und ein erhöhter Wirkungsgrad erzielt werden. Darüber hinaus wird dadurch eine bislang nicht mögliche Gestaltung innovativer Schaufelprofile mit mehr Geometriemöglichkeiten in Bezug auf Positionen, Krümmungen und Winkeln ermöglicht.

## Patentansprüche

1. Schaufel (2) einer Peltonturbine mit einer zumindest abschnittsweise gekrümmten Austrittskante (6), wobei die Austrittskante (6) in einer Seitenansicht einen hinteren Höcker (7) ausbildet, wobei ein Krümmungsmittelpunkt des Höckers in einer Seitenansicht unterhalb der Austrittskante (6) positioniert ist und sich ein Scheitelpunkt (10) des Höckers näher an der Becherwurzel (3) als an der Schaufelstirn (4) befindet, **dadurch gekennzeichnet, dass** der Höcker eine Mittelschneide (5) überragt.

2. Schaufel (2) nach Anspruch 1, **dadurch gekennzeichnet, dass** ein Schwerpunkt des hinteren Höckers (7) zwischen Becherwurzel (3) und einer Mitte zwischen Becherwurzel (3) und Schaufelstirn (4) positioniert ist.

3. Schaufel (2) nach Anspruch 1 oder 2, **dadurch gekennzeichnet, dass** sich der hintere Höcker (7) von der Becherwurzel (3) etwa bis zu einer Mitte zwischen Becherwurzel (3) und Schaufelstirn (4) erstreckt.

4. Schaufel (2) nach einem der Ansprüche 1 bis 3, **dadurch gekennzeichnet, dass** der Höcker einen ersten, konkaven Bereich (11) mit einem Krümmungsmittelpunkt, welcher in einer Seitenansicht oberhalb der Austrittskante (6) positioniert ist, einen zweiten, konvexen Bereich (12) mit einem Krümmungsmittelpunkt, welcher in einer Seitenansicht unterhalb der Austrittskante (6) positioniert ist, und einen dritten, konkaven Bereich (11) mit einem Krümmungsmittelpunkt, welcher in einer Seitenansicht oberhalb der Austrittskante (6) positioniert ist, aufweist.

5. Schaufel (2) nach einem der Ansprüche 1 bis 4, **dadurch gekennzeichnet, dass** die Schaufel (2) einen weiteren, vorderen Höcker (8) aufweist, welcher zumindest abschnittsweise gekrümmt ist, wobei ein Krümmungsmittelpunkt in einer Seitenansicht unterhalb der Austrittskante (6) positioniert ist und wobei ein Scheitelpunkt (10) des vorderen Höckers (8) näher an der Schaufelstirn (4) als an der Becherwurzel (3) angeordnet ist.

6. Schaufel (2) nach Anspruch 5, **dadurch gekennzeichnet, dass** der vordere Höcker (8) eine geringere Höhe als der hintere Höcker (7) aufweist.

7. Schaufel (2) nach einem der Ansprüche 1 bis 6, **dadurch gekennzeichnet, dass** die Austrittskante (6) einen konkaven Bereich (11) aufweist, insbesondere zwischen hinterem Höcker (7) und vorderem Höcker (8).

8. Schaufel (2) nach einem der Ansprüche 1 bis 7, **dadurch gekennzeichnet, dass** Höcker (7, 8) symmetrisch beidseits einer gedachten Mittelebene der Schaufel (2) angeordnet sind.

## Claims

1. A blade (2) of a Pelton turbine with an exit edge (6) which is at least sectionally curved, wherein the exit edge (6) forms a rear hump (7) as viewed from the side, wherein a center of curvature of the hump is positioned below the exit edge (6) as viewed from the side, and an apex (10) of the hump is located closer to the cup root (3) than to the blade face (4), **characterized in that** the hump protrudes over a middle edge (5).

2. The blade (2) according to claim 1, **characterized in that** a center of gravity of the rear hump (7) is positioned between the cup root (3) and a midpoint between the cup root (3) and blade face (4).

3. The blade (2) according to claim 1 or 2, **characterized in that** the rear hump (7) extends from the cup root (3) to about a midpoint between the cup root (3) and blade face (4).

4. The blade (2) according to one of claims 1 to 3, **characterized in that** the hump has a first, concave area (11) with a center of curvature, which is positioned above the exit edge (6) as viewed from the side, a second, convex area (12) with a center of curvature, which is positioned below the exit edge (6) as viewed from the side, and a third, concave area (11) with a center of curvature, which is positioned above the exit edge (6) as viewed from the side.

5. The blade (2) according to one of claims 1 to 4, **characterized in that** the blade (2) has an additional, front hump (8), which is at least sectionally curved, wherein a center of curvature is positioned below the exit edge (6) as viewed from the side, and wherein an apex (10) of the front hump (8) is arranged closer to the blade face (4) than to the cup root (3).

6. The blade (2) according to claim 5, **characterized in that** the front hump (8) is not as high as the rear hump (7).

7. The blade (2) according to one of claims 1 to 6, **characterized in that** the exit edge (6) has a concave area (11), in particular between the rear hump (7) and front hump (8).

8. The blade (2) according to one of claims 1 to 7, **characterized in that** humps (7, 8) are symmetrically arranged on either side of an imagined center plane of the blade (2).

## Revendications

1. Auge (2) d'une turbine de Pelton avec au moins un bord de sortie (6) courbe au moins par endroits, sachant que le bord de sortie (6) constitue en vue de côté une bosse arrière (7), sachant qu'un point central de courbure de la bosse est positionné en vue de côté en dessous du bord de sortie (6) et un sommet (10) de la bosse se trouve plus près sur la racine de godet (3) que sur la face d'auge (4), **caractérisée en ce que** la bosse dépasse une arête centrale vive (5).

2. Auge (2) selon la revendication 1, **caractérisée en ce qu'**un centre de gravité de la bosse arrière (7) est positionné entre la racine du godet (3) et un centre entre la racine de godet (3) et la face d'auge (4).

3. Auge (2) selon au moins la revendication 1 ou 2, **caractérisée en ce que** la bosse arrière (7) s'étend de la racine de godet (3) à peu près jusqu'à un centre entre la racine de godet (3) et la face d'auge (4).

4. Auge (2) selon l'une quelconque des revendications 1 à 3, **caractérisée en ce que** la bosse comporte une première zone concave (11) avec un point central de courbure, lequel est positionné en vue de côté au-dessus du bord de sortie (6), une deuxième zone convexe (12) avec un point central de courbure, lequel est positionné en vue de côté en dessous du bord de sortie (6) et une troisième zone concave (11) avec un point central de courbure, lequel est positionné en vue de côté au-dessus du bord de sortie (6).

5. Auge (2) selon l'une quelconque des revendications 1 à 4, **caractérisée en ce que** l'auge (2) comporte une autre bosse avant (8), laquelle est courbée au moins par endroits, sachant qu'un point central de courbure est positionné en vue de côté en dessous du bord de sortie (6) et sachant qu'un sommet (10) de la bosse avant (8) est disposé plus près sur la face d'auge (4) que sur la racine de godet (3).

6. Auge (2) selon la revendication 5, **caractérisée en ce que** la bosse avant (8) comporte une hauteur plus faible que la bosse arrière (7).

7. Auge (2) selon l'une quelconque des revendications 1 à 6, **caractérisée en ce que** le bord de sortie (6) comporte une zone concave (11), en particulier entre la bosse arrière (7) et la bosse avant (8).

8. Auge (2) selon l'une quelconque des revendications 1 à 6, **caractérisée en ce que** des bosses (7, 8) sont disposés symétriquement des deux côtés d'un plan central considéré de l'auge (2).
